# EUROPEAN PATENT APPLICATION

(11) **EP 4 790 112 A1**
(43) Date of publication of application: **12.08.2026**
(21) Application number: 25224736.6
(22) Date of filing: 18.12.2025
(51) Int. Cl.: C09D 191/00, C08L 95/00, C08K 5/13, C09D 1/00

(54) **COMPOSITION AND TREATMENT METHOD**

(30) Priority: 19.12.2024 US 202463736251 P
(71) Applicant: Colorbiotics LLC, Ames IA 50010 (US)
(72) Inventor: TRAXEL, Michael R., Ames, 50014 (US); COVEY, Jessica L., Ames, 50010 (US)
(74) Representative: Sika Patent Attorneys

(57) **Abstract**

Disclosed is an impregnating coating or impregnating emulsion composition comprising a plant-derived oil having a particular fatty acid composition. The impregnating coating or emulsion composition is used for treating roof coverings by application of the coating or emulsion to a surface of the roof covering for preventing, delaying, and/or reversing degradation of the roof covering. A roof covering treated with the coating or emulsion, methods of treating the roof covering with the emulsion, and a roof including the treated roof covering are also disclosed.

## Description

### TECHNICAL FIELD

The present disclosure relates to compositions for treating roofing materials to extend the life and delay replacement of the treated roofing materials. The present disclosure more particularly relates to emulsion compositions for treating asphalt and bituminous roof covering materials to prevent, delay, and/or reverse degradation of the roof covering materials.

### BACKGROUND

Asphalt and bituminous based roof coverings are widely used in the building and construction industry to protect roofs. One particularly notable asphalt roof covering used on over 80 percent of residential homes in the United States are asphalt roofing shingles.

Asphalt roofing shingles are made by coating, covering, impregnating, or saturating an inorganic fiberglass or organic fiber felt or mat with a hot liquid asphalt composition to form one or more asphalt layers. Surface granules are pressed into the surface of asphalt layer while asphalt composition remains hot for aesthetic and protective purposes.

Asphalt roofing shingles are installed over a roofing substrate of a structure and are exposed to the external environment for the duration of their useful life. While asphalt shingles are installed on a roof of a structure the asphalt oil within the shingles undergoes damaging oxidative degradation. As the aging process progresses, the roofing shingles experience oxidative degradation, they lose their durability, flexibility and pliability, become brittle and crack, and ultimately fail.

The average life expectancy of asphalt roofing shingles is 15 to 30 years, more particularly, 20 to 30 years. Asphalt roofing shingles must be replaced at the end of their useful life resulting in creation of construction waste and high roof covering replacement costs for the owner.

What is needed in the art is a treatment composition that is formulated for application to roof covering materials to extend the life by delaying, preventing, or reversing the effects of oxidative degradation and restoring the performance of the roof covering materials.

### SUMMARY

According to a first illustrative embodiment, disclosed is an emulsion comprising a plant-derived oil, at least one surfactant comprising an alkoxylated aromatic hydrocarbon, and water.

According to a second illustrative embodiment, disclosed is a method for treating an asphalt or bituminous roofing member comprising applying an emulsion comprising a plant-derived oil, at least one surfactant comprising an alkoxylated aromatic hydrocarbon, and water to at least one surface of the asphalt or bituminous roofing member.

According to a third illustrative embodiment, disclosed is an asphalt roofing member or bituminous roofing member having an emulsion comprising a plant-derived oil, at least one surfactant comprising an alkoxylated aromatic hydrocarbon, and water applied to at least one surface of the asphalt or bituminous roofing member.

According to a fourth illustrative embodiment, disclosed is an asphalt roofing shingle, bituminous roofing shingle, asphalt roll roofing, bituminous roll roofing, polymer modified bituminous roll roofing, asphalt impregnated roofing underlayments, bitumen impregnated roofing underlayments, or polymer modified bitumen impregnated roofing underlayments having an emulsion comprising a plant-derived oil, at least one surfactant comprising an alkoxylated aromatic hydrocarbon, and water applied to at least one surface thereof.

According to a fifth illustrative embodiment, disclosed is a roof comprising a roof substrate and an asphalt or bituminous roofing member attached to at least a portion of the roof substrate, wherein the asphalt or bituminous roofing member is treated with an emulsion comprising a plant-derived oil, at least one surfactant comprising an alkoxylated aromatic hydrocarbon, and water.

According a sixth illustrative embodiment, disclosed is a treated asphalt or bituminous roof covering prepared by the process of applying an emulsion comprising a plant-derived oil, at least one surfactant comprising an alkoxylated aromatic hydrocarbon, and water to at least one surface of the asphalt or bituminous roof covering.

According to a seventh illustrative embodiment, disclosed is the use of an emulsion comprising a plant-derived oil, at least one surfactant comprising an alkoxylated aromatic hydrocarbon, and water to treat an asphalt or bituminous roofing member.

According to an eighth illustrative embodiment, disclosed is the use of an emulsion comprising a plant-derived oil, at least one surfactant comprising an alkoxylated aromatic hydrocarbon, and water to prevent oxidative degradation of an asphalt or bituminous roofing member.

According to a ninth illustrative embodiment, disclosed is the use of an emulsion comprising a plant-derived oil, at least one surfactant comprising an alkoxylated aromatic hydrocarbon, and water to attenuate or delay oxidative degradation of an asphalt or bituminous roofing member.

According to a tenth illustrative embodiment, disclosed is the use of an emulsion comprising a plant-derived oil, at least one surfactant comprising an alkoxylated aromatic hydrocarbon, and water to reverse the oxidative degradation of an asphalt or bituminous roofing member.

### DETAILED DESCRIPTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims.

The terms "comprises," "comprising," "has," "having," "includes," "including," "contains," "containing," or any other variation are open-ended and are intended to cover a non-exclusive inclusion of elements, such that an article, apparatus, compound, composition, combination, method, or process that "comprises," "has," or "includes," or "contains" a recited list of elements does not include only those elements but may include other elements not expressly listed, recited or written in the specification or claims. An element or feature proceeded by the language "comprises ...a," "contains . . . a," "has . .. a," or "includes . . .a" does not, without more constraints, preclude the existence or inclusion of additional elements or features in the article, apparatus, compound, composition, combination, method, or process that comprises, contains, has, or includes the element or feature.

The terms "a" and "an" are defined as one or more unless expressly stated otherwise or constrained by other language herein. An element or feature proceeded by "a" or "an" may be interpreted as one of the recited element or feature, or more than one of the element or feature.

The terms "about," "approximately," "essentially," "substantially," any other version thereof, or any other similar relative term, or similar term of approximation, are defined as being close to as understood by one having ordinary skill in the art. By way of non-limiting, illustrative embodiments, these terms are defined to be within 10% of recited value, or defined to be within 5% of a recited value, or defined to be within 4% of a recited value, or defined to be within 3% of a recited value, or defined to be within 2% of a recited value, or defined to be within 1% of a recited value, or defined to be within 0.5% of a recited value, or defined to be within 0.25% of a recited value, or defined to be within 0.1% of a recited value.

It should be understood that when an amount in weight percent is described in the present disclosure, it is intended that any and every amount within the range, including the end points, is to be considered as having been expressly disclosed. For example, the disclosure of "a range of from about 1 to about 100" is to be read as indicating each and every possible number along the continuum between about 1 and about 100. It is to be understood that the inventors appreciate and understand that any and all data points within the range are to be considered to have been specified, and that the inventors have possession of the entire range and all points within the range.

For the avoidance of doubt, alternative and optional features indicated for a given aspect, component, feature, or parameter of the invention should, unless the context indicates otherwise, be regarded as having been disclosed in combination with any and all other alternative or optional features and the like as indicated for the same or other aspects, features and parameters of the invention.

Disclosed is a composition for treating asphalt and bituminous roof materials for the purpose of delaying, preventing, and/or reversing oxidative degradation caused by exposure of the roofing materials to the external environment. By delaying, preventing, and/or reversing degradation of the roofing materials, it is possible to extend the overall life the roofing materials before replacement.

The composition for treating the roofing materials comprises at least one plant-derived oil having a high content of one or more unsaturated fatty acids. The high fatty acid content of the at least one plant-derived oil of the composition exhibits a strong affinity for the asphalt binder. The interaction of the at least one plant-derived oil of the treatment composition with the asphalt binder in the aged roofing materials restores flexibility to the roofing materials. This rejuvenates and/or revitalizes the aged asphalt present in the roofing materials by at least partially replacing the bitumen oils that have been lost over time as the asphalt has been oxidized and degraded. The treatment composition revitalizes and rejuvenates the aged and degraded asphalt by reacting with the damaged and oxidized binding sites within the asphalt of the aging roof shingles. This reaction rejuvenates the asphalt binder by reversing stiffness and reducing cracking of the asphalt composition. Once topically applied to the roof shingles, the treatment composition can restore the asphalt binder to be like new which effectively extends the life of the roof covering.

According to certain embodiments, the plant-derived oil comprises a soybean derived oil. According to certain embodiments, the soybean derived oil is at least partially epoxidized. According to certain embodiments, the soybean derived oil is fully epoxidized. The term "fully epoxidized" means that all unsaturated reactive sites of the major fatty acid constituents of the soybean derived oil are replaced with epoxide groups. A fully epoxidized soybean derived oil can be used as the plant-derived oil component of any one or more of the illustrative embodiments of the treatment composition and treatment emulsion disclosed herein. According to certain illustrative embodiments, the plant-derived oil component of the treatment composition comprises one or more monounsaturated fatty acids and one or more polyunsaturated fatty acids. According to certain embodiments, the plant-derived oil component of the treatment composition comprises one or more monounsaturated fatty acids and one or more polyunsaturated fatty acids, and the total amount of the one or more polyunsaturated fatty acids present in the plant-derived oil component is greater than the total amount of the monounsaturated fatty acids present in the plant-derived oil component.

According to certain illustrative embodiments, the plant-derived oil component of the treatment composition comprises one or more unsaturated fatty acids and one or more saturated fatty acids. According to certain embodiments, the plant-derived oil component of the treatment composition comprises one or more unsaturated fatty acids and one or more saturated fatty acids, and the total amount of the one or more unsaturated fatty acids present in the oil component is greater than the total amount of the saturated fatty acids present in the oil component.

According to certain embodiments, the plant-derived oil component of the treatment composition comprises one or more unsaturated fatty acids in an amount of 20 weight percent or greater and one or more saturated fatty acids in an amount of less than 20 weight percent based on the total weight of the plant-derived oil component of the treatment composition. According to certain illustrative embodiments, the plant-derived oil component of the treatment composition comprises one or more unsaturated fatty acids in an amount of 20 weight percent or greater, or 25 weight percent or greater, or 30 weight percent or greater, or 35 weight percent or greater, or 40 weight percent or greater, or 45 weight percent or greater, or 50 weight percent or greater, or 55 weight percent or greater, or 60 weight percent or greater, or 65 weight percent or greater, or 70 weight percent or greater, or 75 weight percent or greater, or 80 weight percent or greater, based on the total weight of the plant-derived oil component of the treatment composition. According to certain illustrative embodiments, the plant-derived oil component of the treatment composition comprises one or more saturated fatty acids in an amount of 19 weight percent or less, or 18 weight percent or less, or 17 weight percent or less, or 16 weight percent or less, or 15 weight percent or less, or 14 weight percent or less, or 13 weight percent or less, or 12 weight percent or less, or 11 weight percent or less, or 10 weight percent or less, based on the total weight of the plant-derived oil component.

According to certain illustrative embodiments, the plant-derived oil component of the treatment composition comprises one or more monounsaturated fatty acids, one or more polyunsaturated fatty acids, and one or more saturated fatty acids. According to certain embodiments, the plant-derived oil component of the treatment composition comprises one or more monounsaturated fatty acids, one or more polyunsaturated fatty acids, and one or more saturated fatty acids, and the total amount of the one or more unsaturated fatty acids present in the plant-derived oil component is greater than the total amount of the saturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, and the total amount of the one or more monounsaturated fatty acids present in the plant-derived oil component is greater than the total amount of the saturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, and the total amount of the one or more polyunsaturated fatty acids present in the plant-derived oil component is greater than the total amount of the saturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, and the amount of the one or more monounsaturated fatty acids, and the amount of the polyunsaturated fatty acids, present in the plant-derived oil component are each independently greater than the total amount of the saturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, the total amount of the one or more monounsaturated fatty acids and one or more polyunsaturated fatty acids are greater than the amount of the one or more saturated fatty acids, and the amount of the one or more monounsaturated fatty acids, and the amount of the polyunsaturated fatty acids, present in the plant-derived oil component are each independently greater than the total amount of the saturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, the total amount of the one or more monounsaturated fatty acids and one or more polyunsaturated fatty acids are greater than the amount of the one or more saturated fatty acids, and the amount of the polyunsaturated fatty acids is greater than the amount of the one or more monounsaturated fatty acids present in the plant-derived oil component.

According to certain embodiments, the plant-derived oil component of the treatment composition comprises one or more monounsaturated fatty acids, one or more polyunsaturated fatty acids, and one or more saturated fatty acids, the total amount of the one or more monounsaturated fatty acids and one or more polyunsaturated fatty acids is greater than the amount of the one or more saturated fatty acids, the amount of the one or more monounsaturated fatty acids and the amount of the polyunsaturated fatty acids present in the plant-derived oil component are each independently greater than the total amount of the saturated fatty acids, and the amount of the polyunsaturated fatty acids is greater than the amount of the one or more monounsaturated fatty acids present in the plant-derived oil component.

According to certain illustrative embodiments, the plant-derived oil component of the treatment composition comprises the one or more polyunsaturated fatty acids in an amount in the range of about 50 weight percent to about 65 weight percent, the one or more monounsaturated fatty acids in an amount in the range of about 20 weight percent to about 30 weight percent, and the saturated fatty acids in an amount in the range of about 10 weight percent to less than 20 weight percent, based on the total weight of the plant-derived oil component of the treatment composition and the total amount of the one or more polyunsaturated fatty acid, the one or more monounsaturated fatty acid, and the one or more saturated fatty acid does not exceed 100 weight percent. A person of ordinary skill in the art would understand that the amount of the ingredients will be adjusted to include the desired amount of these components without exceeding 100% by weight of the composition.

According to certain illustrative embodiments, the plant-derived oil component of the treatment composition comprises the one or more polyunsaturated fatty acids in an amount in the range of about 55 weight percent to about 65 weight percent, the one or more monounsaturated fatty acids in an amount in the range of about 20 weight percent to about 25 weight percent, and the saturated fatty acids in an amount in the range of about 15 weight percent to less than 20 weight percent, based on the total weight of the plant-derived oil component of the treatment composition and the total amount of the one or more polyunsaturated fatty acid, the one or more monounsaturated fatty acid, and the one or more saturated fatty acid does not exceed 100 weight percent.

According to certain illustrative embodiments, the plant-derived oil component of the treatment composition comprises the one or more polyunsaturated fatty acids in an amount in the range of about 60 weight percent to about 65 weight percent, the one or more monounsaturated fatty acids in an amount in the range of about 20 weight percent to about 25 weight percent, and the saturated fatty acids in an amount in the range of about 15 weight percent to less than 20 weight percent, based on the total weight of the plant-derived oil component of the treatment composition and the total amount of the one or more polyunsaturated fatty acid, the one or more monounsaturated fatty acid, and the one or more saturated fatty acid does not exceed 100 weight percent.

According to certain embodiments, the plant-derived oil component of the treatment composition comprises one or more monounsaturated fatty acids, one or more polyunsaturated fatty acids, and one or more saturated fatty acids comprise a blend of linoleic acid (ω-3) and linoleic acid and the one or more monounsaturated fatty acids comprise at least oleic acid (ω-9) and other monosaturated fatty acids.

The plant-derived oil component of the treatment composition comprises 1 weight percent or less of the other ingredients based on the total weight of the oil component. According to certain embodiments, the oil component of the treatment composition comprises 0.9 weight percent or less of the other ingredients, or 0.8 weight percent or less, or 0.75 weight percent or less, or 0.7 weight percent or less, or 0.6 weight percent or less, or 0.5 weight percent or less, or 0.4 weight percent or less, or 0.3 weight percent or less, or 0.25 weight percent or less, or 0.2 weight percent or less, or 0.1 weight percent or less, or 0.075 weight percent or less, or 0.05 weight percent or less, or 0.025 weight percent or less, or 0.01 weight percent or less, based on the total weight of the oil component of the treatment composition. The other components may include fatty carboxylic acids other than linoleic acid, linolenic acid, and oleic acid, and glycerides.

The treatment composition may comprise an emulsion comprising an oil phase comprising one or more plant-derived oils, a water phase, and one or more surfactants. According to certain illustrative embodiments, the plant-derived oil component of the emulsion comprises one or more monounsaturated fatty acids and one or more polyunsaturated fatty acids. According to certain embodiments, the plant-derived oil component of the emulsion comprises one or more monounsaturated fatty acids and one or more polyunsaturated fatty acids, and the total amount of the one or more polyunsaturated fatty acids present in the plant-derived oil component is greater than the total amount of the monounsaturated fatty acids present in the plant-derived oil component.

According to certain illustrative embodiments, the plant-derived oil component of the emulsion comprises one or more unsaturated fatty acids and one or more saturated fatty acids. According to certain embodiments, the plant-derived oil component of the treatment emulsion comprises one or more unsaturated fatty acids and one or more saturated fatty acids, and the total amount of the one or more unsaturated fatty acids present in the oil component is greater than the total amount of the saturated fatty acids present in the oil component.

According to certain embodiments, the plant-derived oil component of the treatment emulsion comprises one or more unsaturated fatty acids in an amount of 20 weight percent or greater and one or more saturated fatty acids in an amount of less than 20 weight percent based on the total weight of the plant-derived oil component of the treatment composition. According to certain illustrative embodiments, the plant-derived oil component of the treatment emulsion comprises one or more unsaturated fatty acids in an amount of 20 weight percent or greater, or 25 weight percent or greater, or 30 weight percent or greater, or 35 weight percent or greater, or 40 weight percent or greater, or 45 weight percent or greater, or 50 weight percent or greater, or 55 weight percent or greater, or 60 weight percent or greater, or 65 weight percent or greater, or 70 weight percent or greater, or 75 weight percent or greater, or 80 weight percent or greater, based on the total weight of the plant-derived oil component of the treatment emulsion. According to certain illustrative embodiments, the plant-derived oil component of the treatment emulsion comprises one or more saturated fatty acids in an amount of 19 weight percent or less, or 18 weight percent or less, or 17 weight percent or less, or 16 weight percent or less, or 15 weight percent or less, or 14 weight percent or less, or 13 weight percent or less, or 12 weight percent or less, or 11 weight percent or less, or 10 weight percent or less, based on the total weight of the plant-derived oil component.

According to certain illustrative embodiments, the plant-derived oil component of the treatment emulsion comprises one or more monounsaturated fatty acids, one or more polyunsaturated fatty acids, and one or more saturated fatty acids. According to certain embodiments, the plant-derived oil component of the treatment emulsion comprises one or more monounsaturated fatty acids, one or more polyunsaturated fatty acids, and one or more saturated fatty acids, and the total amount of the one or more unsaturated fatty acids present in the plant-derived oil component is greater than the total amount of the saturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, and the total amount of the one or more monounsaturated fatty acids present in the plant-derived oil component is greater than the total amount of the saturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, and the total amount of the one or more polyunsaturated fatty acids present in the plant-derived oil component is greater than the total amount of the saturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, and the amount of the one or more monounsaturated fatty acids, and the amount of the polyunsaturated fatty acids, present in the plant-derived oil component are each independently greater than the total amount of the saturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, the total amount of the one or more monounsaturated fatty acids and one or more polyunsaturated fatty acids are greater than the amount of the one or more saturated fatty acids, and the amount of the one or more monounsaturated fatty acids, and the amount of the polyunsaturated fatty acids, present in the plant-derived oil component are each independently greater than the total amount of the saturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, the total amount of the one or more monounsaturated fatty acids and one or more polyunsaturated fatty acids are greater than the amount of the one or more saturated fatty acids, and the amount of the polyunsaturated fatty acids is greater than the amount of the one or more monounsaturated fatty acids present in the plant-derived oil component.

According to certain embodiments, the plant-derived oil component of the treatment emulsion comprises one or more monounsaturated fatty acids, one or more polyunsaturated fatty acids, and one or more saturated fatty acids, the total amount of the one or more monounsaturated fatty acids and one or more polyunsaturated fatty acids is greater than the amount of the one or more saturated fatty acids, the amount of the one or more monounsaturated fatty acids and the amount of the polyunsaturated fatty acids present in the plant-derived oil component are each independently greater than the total amount of the saturated fatty acids, and the amount of the polyunsaturated fatty acids is greater than the amount of the one or more monounsaturated fatty acids present in the plant-derived oil component.

According to certain illustrative embodiments, the plant-derived oil component of the treatment emulsion comprises the one or more polyunsaturated fatty acids in an amount in the range of about 50 weight percent to about 65 weight percent, the one or more monounsaturated fatty acids in an amount in the range of about 20 weight percent to about 30 weight percent, and the saturated fatty acids in an amount in the range of about 10 weight percent to less than 20 weight percent, based on the total weight of the plant-derived oil component of the treatment emulsion and the total amount of the one or more polyunsaturated fatty acid, the one or more monounsaturated fatty acid, and the one or more saturated fatty acid does not exceed 100 weight percent. A person of ordinary skill in the art would understand that the amount of the ingredients will be adjusted to include the desired amount of these components without exceeding 100% by weight.

According to certain illustrative embodiments, the plant-derived oil component of the treatment emulsion comprises the one or more polyunsaturated fatty acids in an amount in the range of about 55 weight percent to about 65 weight percent, the one or more monounsaturated fatty acids in an amount in the range of about 20 weight percent to about 25 weight percent, and the saturated fatty acids in an amount in the range of about 15 weight percent to less than 20 weight percent, based on the total weight of the plant-derived oil component of the treatment composition and the total amount of the one or more polyunsaturated fatty acid, the one or more monounsaturated fatty acid, and the one or more saturated fatty acid does not exceed 100 weight percent.

According to certain illustrative embodiments, the plant-derived oil component of the treatment emulsion comprises the one or more polyunsaturated fatty acids in an amount in the range of about 60 weight percent to about 65 weight percent, the one or more monounsaturated fatty acids in an amount in the range of about 20 weight percent to about 25 weight percent, and the saturated fatty acids in an amount in the range of about 15 weight percent to less than 20 weight percent, based on the total weight of the plant-derived oil component of the treatment emulsion and the total amount of the one or more polyunsaturated fatty acid, the one or more monounsaturated fatty acid, and the one or more saturated fatty acid does not exceed 100 weight percent.

According to certain embodiments, the plant-derived oil component of the treatment emulsion comprises one or more monounsaturated fatty acids, one or more polyunsaturated fatty acids, and one or more saturated fatty acids comprise a blend of linoleic acid (ω-3) and linoleic acid and the one or more monounsaturated fatty acids comprise at least oleic acid (ω-9) and other monosaturated fatty acids.

The plant-derived oil component of the treatment emulsion comprises 1 weight percent or less of the other ingredients based on the total weight of the oil component. According to certain embodiments, the oil component of the treatment composition comprises 0.9 weight percent or less of the other ingredients, or 0.8 weight percent or less, or 0.75 weight percent or less, or 0.7 weight percent or less, or 0.6 weight percent or less, or 0.5 weight percent or less, or 0.4 weight percent or less, or 0.3 weight percent or less, or 0.25 weight percent or less, or 0.2 weight percent or less, or 0.1 weight percent or less, or 0.075 weight percent or less, or 0.05 weight percent or less, or 0.025 weight percent or less, or 0.01 weight percent or less, based on the total weight of the oil component of the treatment emulsion.

The emulsion includes an effective amount of at least one surfactant to form an emulsion from the oil phase and the water phase. Without limitation, and only by way of illustration, suitable surfactants which may be used to prepare the emulsion from the oil phase and the water phase include anionic surfactants, cationic surfactants, zwitterionic surfactants, and non-ionic surfactants.

Without limitation, and only by way of illustration, suitable non-ionic surfactants that may be used to prepare the emulsion from the oil phase and the water phase include fatty alcohols, cetyl alcohols, stearyl alcohols, cetostearyl alcohols, and oleyl alcohols, polyethylene glycol alkyl ethers such as octaethylene glycol monododecyl ether and pentaethylene glycol monododecyl ether, polypropylene glycol alkyl ethers, glucoside alkyl ethers such as decyl glucoside, lauryl glucoside, octyl glucoside; polyethylene glycol octylphenyl ethers, polyethylene glycol alkylphenyl ethers, glycerol alkyl esters, polyoxyethylene glycol sorbitan alkyl esters such as polysorbate, sorbitan alkyl esters, cocamide MEA, cocamide DEA, dodecyldimethylamine oxide, block copolymers of polyethylene glycol and polypropylene glycol, polyethoxylated tallow amine. According to certain embodiments, the non-ionic surfactant is substantially or completely free of nonylphenol ethoxylates and/or substantially or completely free of alkylphenol ethoxylates. According to certain embodiments, the non-ionic surfactant comprises an alkoxylated polymer that is substantially or completely free of nonylphenol ethoxylates and/or substantially or completely free of alkylphenol ethoxylates. According to certain embodiments, the non-ionic surfactant comprises an alkoxylated polycyclic aromatic hydrocarbon. According to certain embodiments, the non-ionic surfactant comprising an alkoxylated polycyclic aromatic hydrocarbon comprises a naphthalene alkoxylate. The naphthalene alkoxylate polymer may be prepared by the addition of an alkoxy group(s), such as ethylene oxide, propylene oxide, butylene oxide, and combinations of these alkoxy groups to naphthalene. According to certain embodiments, the non-ionic surfactant comprises an alkoxylated polycyclic aromatic hydrocarbon polymer that is substantially or completely free of nonylphenol ethoxylates and/or substantially or completely free of alkylphenol ethoxylates. According to certain embodiments, the non-ionic surfactant comprises a naphthalene alkoxylate polymer that is substantially or completely free of nonylphenol ethoxylates and/or substantially or completely free of alkylphenol ethoxylates.

Without limitation, and only by way of illustration, suitable anionic surfactants that may be used to prepare the emulsion from the oil phase and the water phase include those surfactants containing anionic functional groups at their head, such as sulfates, sulfonates, phosphates, and carboxylates. Exemplary alkyl sulfates include ammonium lauryl sulfate, sodium lauryl sulfate, sodium dodecyl sulfate, sodium laureth sulfate, sodium lauryl ether sulfate, and sodium myreth sulfate, alkyl-aryl ether phosphates, alkyl ether phosphates.

Without limitation, and only by way of illustration, suitable cationic surfactants that may be used to prepare the emulsion from the oil phase and the water phase include those surfactants containing cationic functional groups at their head and having a fatty acid derived tail. According to certain embodiments, the nitrogen-containing group can be either a tertiary or quaternary amine. The cationic surfactants may be either alkyl amines, alkyl amine salts, or alkyl quaternary ammonium salts. Suitable alkyl amines or alkyl amine salts may include stearamidopropyl dimethylamine (lactate, citrate, propionate), isostearamidopropyl dimethylamine, isostearamidopropyl morpholine, behenamidopropyl dimethylamine. Without limitation, suitable quaternary ammonium salts include stearalkonium chloride, cetrimonium bromide, cetrimonium chloride, cetylpyridinium bromide, cetylpyridinium chloride, benzalkonium chloride, behentrimonium chloride, behentrimonium methosulfate, benzethonium chloride, dimethyldioctadecylammonium chloride, dioctadecyldimethylammonium bromide, cinnamidopropyltrimonium chloride, cocotrimonium chloride, dicetyldimonium chloride, dicocodimonium chloride, hydrogenated palm trimethylammonium chloride and lauryltrimonium chloride.

Zwitterionic (amphoteric) surfactants have both cationic and anionic functional charges in the head of the molecule. Suitable zwitterionic surfactants include betaines, sulphobetaines, amidobetaines, imidazoline betaines and amide oxides. Betaines have a quaternary ammonium cation and a carboxylate anion in the same molecule. The betaine structure has the general formula R-N+(CH3)2-CH2-COO-. An example of a betaine is cocamidopropyl betaine. Sulfobetaines have a quaternary ammonium cation and a sulfonate anion in the same molecule. The sulfobetaine structure has the general formula R-N+(CH3)2-CH2-CH2-SO3-. An example of a sulfobetaine is lauryl hydroxysultaine. Amine oxides have a quaternary ammonium cation and an oxygen anion in the same molecule. The amine oxide structure has the general formula R-N+(CH3)2-CH2-O-. An example of an amine oxide is lauryl dimethylamine oxide. Amido betaines are similar to betaines, but have an amide group in place of the carboxylate group. Imidazoline betaines: Imidazoline betaines have an imidazoline ring in the structure.

According to certain illustrative embodiments, the treatment emulsion comprises one or more zwitterionic surfactants and one or more non-ionic surfactants. According to certain embodiments, the zwitterionic surfactant used to prepare the treatment emulsion comprises soy-derived lecithin and the non-ionic surfactant comprises an alkoxylated polymeric dispersant. The use of these two surfactants in combination at least partially coat the emulsion oil droplets, prevent oil droplet agglomeration, prevent separate of the oil and water phases.

According to certain illustrative embodiments, the plant-derived oil phase comprises from about 25 weight percent to about 35 weight percent, or from about 28 weight percent to about 32 weight percent, or from about 29.5 weight percent to about 30.5 weight percent, based on the total weight of the emulsion

According to certain illustrative embodiments, the water phase comprises from about 58.75 weight percent to about 71.75 weight percent, or from about 61.75 weight percent to about 68.75 weight percent, or from about 62.75 weight percent to about 66.75 weight percent, based on the total weight of the emulsion

According to certain illustrative embodiments, the at least one surfactant may be included in the emulsion in an amount from about 3 weight percent to about 10 weight percent, or from about 4 weight percent to about 9 weight percent, or from about 5.5 weight percent to about 7.5 weight percent, based on the total weight of the emulsion

According to certain illustrative embodiments, the emulsion comprises from about 25 weight percent to about 35 weight percent of the plant-derived oil phase, from about 3 weight percent to about 10 weight percent of said at least one surfactant, and from about 58.75 weight percent to about 71.75 weight percent of water.

According to certain illustrative embodiments, the emulsion comprises from about 28 weight percent to about 32 weight percent of the plant-derived oil phase, from about 4 weight percent to about 8 weight percent of said at least one surfactant, and from about 61.75 weight percent to about 68.75 weight percent of water.

According to certain illustrative embodiments, the emulsion comprises from about 29.5 weight percent to about 30.5 weight percent of the plant-derived oil phase, from about 5.5 weight percent to about 7.5 weight percent of said at least one surfactant, and from about 62.75 weight percent to about 66.75 weight percent of water.

The emulsion may comprise one or more further additives including, for example, colorants, pigments, defoamers, moisture scavenging molecules, adhesion promoters, UV absorbers, antioxidants, biocides, UV stabilizers, pH modifiers, rheology modifiers, and thixotropic agents. According to certain embodiments, the one or more further additives may be included in the emulsion in an amount from about 0.05 weight percent to about 12.25 weight percent, or from about 0.05 weight percent to about 8 weight percent, or from about 0.05 weight percent to about 4 weight percent, based on the total weight of the emulsion.

The treatment emulsion may also include a defoamer to reduce the amount of foaming or gas bubbles produced. Suitable examples of defoamers which may be used include but are not limited to silicone defoamers, mineral oil/silica defoamers, low surface tension additives and mixtures thereof. Examples of silicone defoamers which may be used include but are not limited to polysiloxane solutions and non-aqueous emulsions of polysiloxanes. Examples of polysiloxane solutions which may be used as a defoamer include but are not limited to a cyclohexanone polysiloxane solution, a diisobutylketone polysiloxane solution and mixtures thereof. An example of a non-aqueous polysiloxane emulsion which may be used as a defoamer is a polysiloxane propylene glycol emulsion. In certain embodiments, the defoamer is a diisobutylketone polysiloxane solution commercially available from BYK Chemie GmbH (Wesel, Germany) under the under the trademarks BYK^{®}-066N, BYK^{®}-070, BYK^{®}-077, BYK^{®}-A500. In other embodiments, the defoamer is a silicone defoamer commercially available from Cognis (Monheim, Germany) under the trademark DEHYDRAN^{®} 1208. The amount of defoamer used in the treatment emulsion may range from about 0.01 to about 1 percent by weight of the oil phase of the treatment emulsion.

According to certain embodiments, the treatment emulsion may include one or more gelling agents. Without limitation, and only by way of illustration, the one or more gelling agent may be selected from gums such as acacia gum, cellulose gum, guar gum, locust bean gum, and xanthan gum, agar agar, alginic acid and salts of alginic acid such as calcium alginate, sodium alginate, potassium alginate, and ammonium alginate, albumin, carrageenan, collagen, gelatin, konjac, pectin, pullulan, polyvinyl alcohol polymers, acrylic polymers, styrene-butadiene polymers, carboxyalkyl celluloses such as carboxymethyl cellulose, hydroxyalkyl celluloses such as hydroxyethyl cellulose and hydroxymethyl cellulose, mineral clays such as attapulgite and bentonite clays, silicone resins, modified silicone resins, and the like. According to certain embodiments, the gelling agent is included in the emulsion in an amount from about 0.1 weight percent to about 1 weight percent based on the weight of the oil phase of the treatment emulsion.

The emulsion may also include a biocide to delay or prevent the growth of biological organisms. Without limitation, and only by way of illustration, the biocide maybe selected from bacteriacides, fungicides, germicides, insecticides, mildewcides, pesticides, and the like. Suitable non-limiting examples of fungicides, mildewcides, and biocides may comprise, among others, 4,4-dimethyloxazolidine, 3,4,4-trimethyloxazolidine, modified barium metaborate, potassium N-hydroxy-methyl-N-methyldithiocarbamate, 2-(thiocyanomethylthio) benzothiazole, potassium dimethyl dithiocarbamate, adamantane, N-(trichloromethylthio) phthalimide, 2,4,5,6-tetrachloroisophthalonitrile, orthophenyl phenol, 2,4,5-trichlorophenol, dehydroacetic acid, copper naphthenate, copper octoate, organic arsenic, tributyl tin oxide, zinc naphthenate, copper 8-quinolinate, or mixtures thereof. According to certain embodiments, the biocide is included in the treatment emulsion in an amount in the range of about 0.1 weight percent to about 1 weight percent.

Suitable non-limiting examples of UV stabilizers include benzophenone derivatives, benzotriazole derivatives, thioxanthonate derivatives, piperidinolcarboxylic ester derivatives, cinnamic ester derivatives or mixtures thereof.

The emulsion may include at least one filler. The term "filler" refers to a nonreactive material that is added to emulsion to increase the volume. Without limitation, suitable fillers include quartz sand, powdered quartz, calcium carbonate, low-density fillers such as vermiculite, perlite, diatomaceous earth, mica, talc powder, magnesium oxide, foamed glass, hollow spheres, foam sand, clay, and polymer particles, high density fillers such as barium sulphate, metal salts such as zinc salts, calcium salts, and mixtures thereof. According to certain illustrative embodiments, the one or more fillers may be included in the emulsion in an amount from about 0 weight percent to about 10 weight percent, or from about 0 weight percent to about 5 weight percent, or from about 0 weight percent to about 2.5 weight percent, based on the total weight of the emulsion.

The coloring agent may include any known natural or synthetic pigment that is generally acceptable for use in formulating reactive resin compositions. These pigments include inorganic pigments, organic pigments or mixtures of inorganic and organic pigments. In certain illustrative embodiments, the desired color is achieved by combining at least two coloring agents. The amounts of coloring agents combined may vary in any amount to obtain the desired color. Examples of pigments include, but are not limited to, red iron oxide, yellow iron oxide, black iron oxide, brown iron oxide, titanium dioxide, zinc oxide, zirconium oxide, cerium oxide, chromium oxide, chromium hydroxide, chromium hydrate, manganese violet, ferric ferrocyanide, guanine (natural pearl) mica, sericite, talc, magnesium carbonate, calcium carbonate, alumina hydroxide, barium sulfate, beta-carotene, annatto, chlorophyllin-copper complex, lycopene, henna, bronze powder, (metallic), copper powder (metallic), silver powder (metallic), gold powder (metallic), ultramarine blues, Lake pigments and the like. Carbon black and titanium dioxide may act as both pigments and fillers in the reactive resin composition.

The emulsion may further include at least one flame or fire retardant. The flame or fire retardant material may be selected from any material that delays, inhibits, or slows the spread of fire by suppressing chemical reactions. According to certain embodiments, the flame retardant may comprise antimony compounds, magnesium hydroxide, aluminum hydroxides, aluminum trihydrate, aluminum oxide hydrate, boron compound such as borates, carbonates, calcium carbonates, bicarbonates, inorganic halides, sulfates, organic halogens, organic phosphorous compounds and combinations thereof. Suitable antimony compounds include, without limitation, antimony trioxide, antimony pentoxide and sodium animonate. Organic halogens include, for example, organobromines and organic chlorines. Suitable organobromines include, without limitation, decabromodiphenyl ether and decabromodiphenyl ethane. Suitable organobromines include polymeric brominated compounds such as brominated polystyrenes, brominated carbonate oligomers, brominated epoxy oligomers, tetrabromophthalic anhydride, tetrabromobisphenol A, and hexabromocyclododecane. Suitable organochlorines include, without limitation, derivatives of chlorenic acid and chlorinated paraffins. Suitable organophosphorus compounds include, without limitation, triphenyl phosphate, resorcinol bis(diphenylphosphate), bisphenol diphenyl phosphate, tricresyl phosphate, triarylphosphates, ammonium polyphosphate, trischloropropyl phosphate, red phosphorous, and phosphonates. Suitable phosphonates include, without limitation, dimethyl methylphosphonate, aluminum diethyl phosphonate, and metal phosphonates, phosphates such as triphenyl phosphate, polyammonium phosphate, monoammonium phosphate, or tri(2-chloroethyl) phosphate, exfoliated graphite, acid treated natural graphite flakes, or mixtures thereof.

Additionally disclosed is an asphalt roofing member or bituminous roofing member having the presently disclosed emulsion applied to at least one surface of the roofing member. According to certain embodiments, the asphalt or bituminous roofing member comprises an asphalt or bituminous base and the emulsion comprising a plant-derived oil, at least one surfactant, and water applied to at least one surface of the asphalt or bituminous base. Without limitation, and only by way of illustration, the asphalt or bituminous roofing member may be selected from asphalt roofing shingles, bituminous roofing shingles, asphalt roll roofing, bituminous roll roofing, polymer modified bituminous roll roofing, asphalt impregnated roofing underlayments, bitumen impregnated roofing underlayments, and polymer modified bitumen impregnated roofing underlayments.

Also disclosed is a method of making the treatment emulsion from an oil phase, water phase and one or more surfactants. The method comprises emulsifying an oil phase comprising the disclosed plant-derived oil with water in the presence of at least one surfactant. The method comprises combining the oil phase comprising the plant-derived oil and the water phase in the present of at least one surfactant and subjecting the combined oil and water phases to at least one mixing operation under conditions suitable to form an oil-in-water emulsion or a water-in-oil emulsion.

According to certain illustrative embodiments, the method for preparing the treatment emulsion comprises combining from about 25 weight percent to about 35 weight percent of the disclosed wet milled corn oil phase and from about 58.75 weight percent to about 71.75 weight percent of a water phase in the presence of from about 3 weight percent to about 10 weight percent of at least one surfactant, and subjecting the combined oil and water phases to at least one mixing operation under conditions suitable to form an oil-in-water emulsion or a water-in-oil emulsion.

According to certain illustrative embodiments, the method for preparing the treatment emulsion comprises combining from about 28 weight percent to about 32 weight percent of the disclosed plant-derived oil phase and from about 61.75 weight percent to about 68.75 weight percent of a water phase in the presence of from about 4 weight percent to about 8 weight percent of at least one surfactant, and subjecting the combined oil and water phases to at least one mixing operation under conditions suitable to form an oil-in-water emulsion or a water-in-oil emulsion.

According to certain illustrative embodiments, the method for preparing the treatment emulsion comprises combining from about 29.5 weight percent to about 30.5 weight percent of the disclosed wet milled corn oil phase and from about 62.75 weight percent to about 66.75 weight percent of a water phase in the presence of from about 5.5 weight percent to about 7.5 weight percent of at least one surfactant, and subjecting the combined oil and water phases to at least one mixing operation under conditions suitable to form an oil-in-water emulsion or a water-in-oil emulsion.

According to certain embodiments, the method of making the emulsion comprises providing an oil phase comprising one or more plant-derived oils into a mixing container or vessel. One or more surfactants are added into the mixing vessel containing the corn oil. Other additives, for example, defoamers, biocides, and gelling agents may be added to the corn oil containing the one or more surfactants. The oil phase containing the oil, surfactants and optional other additives are subjected to a mixing operation at a mixing speed of about 750 to about 850 RPM for about 10 to about 20 minutes. The oil phase may be mixed using a Hockmeyer disperser equipped with a 4-inch F-style blade. While the oil phase is still being mixed, a portion or an entire amount of the water of the water phase is added into the mixing vessel. According to certain embodiments, the total amount of the water of the water phase is added into the mixing vessel with the oil phase and both phases are subjected to shear mixing to prepare the emulsion. According to other embodiments, an initial portion of the total amount of water of the water phase is added into the mixing vessel containing the oil phase, the oil and water phases are subjected to shear mixing. The remaining amount of the total amount of the water of the water phase is added to the mixing vessel with additional high shear mixing to form the final emulsion. According to certain embodiments, while the oil phase is being mixed, an initial portion of the water of the water phase is slowly added into the mixing vessel while the oil phase is being mixed. While the oil phase is being mixed, the contents of the mixing vessel are subjected to shearing with a suitable rotor-stator mixer at a frequency of about 85 to about 90 Hertz for about 10 to about 20 minutes. For the remainder of the water phase the rotor-stator is turned off and the vessel is mixed via the Hockmeyer at 750 to about 850 RPM for about 10 to about 20 minutes.

The emulsion droplet size distribution is measured using a laser diffraction particle size analyzer (Bettersizer 2600; Bettersize Inc., Tinton Falls, NJ, USA). The average emulsion droplet size of the treatment emulsion is in the range of greater than 0 µm to about 100 µm, or from about 5 µm to about 95 um, or from about 5 µm to about 90 µm, or from about 5 µm to about 85 µm, or from about 5 µm to about 80 µm, or from about 5 µm to about 75 µm, or from about 5 µm to about 70 µm, or from about 5 µm to about 65 µm, or from about 5 µm to about 60 µm, or from about 5 µm to about 55 µm, or from about 5 µm to about 50 µm, or from about 5 µm to about 45 µm, or from about 5 µm to about 40 µm, or from about 5 µm to about 35 µm, or from about 5 µm to about 30 µm, or from about 5 µm to about 25 µm, or from about 5 µm to about 20 µm, or from about 5 µm to about 15 µm, or from about 5 µm to about 10 µm, or from greater than 0 µm to about 25 µm, or from greater than 0 µm to about 20 µm, or from greater than 0 µm to about 15 µm, or from greater than 0 µm to about 10 µm, or from about 10 µm to about 90 µm, or from about 20 µm to about 80 µm, or from about 30 µm to about 70 µm, or from about 40 µm to about 60 µm. The emulsion treatment having controlled emulsion droplet sizes are able to effectively coat and penetrate into the thickness of the asphalt shingle to reverse brittleness, promote flexibility and pliability, and extend the life and performance of the roofing shingles to which the emulsion treatment is applied.

Stability of the emulsion treatment is evaluated in terms of agglomeration of the emulsion droplets and phase separation of the emulsion treatment over time. The absence of droplet agglomeration and phase separation indicate a stable emulsion structure. Agglomeration and phase separation are evaluated by retesting of droplet size distribution and visual assessment. According to certain embodiments, the disclosed emulsion treatment is stable for at least 12 months.

Also disclosed is a method for treating an asphalt or bituminous roofing member with the emulsion composition to delay, prevent and/or reverse oxidative degradation of roofing materials. The method comprises applying an effective amount of the emulsion composition comprising one or more plant-derived oils, at least one surfactant, and water to at least one surface of the asphalt or bituminous roofing member. The applied emulsion composition is permitted to impregnate at least partially through the thickness of the roofing covering material and dry. The method of applying the emulsion composition to the roofing covering comprises applying the emulsion composition *in situ* to a surface of the roof covering installed on a roof structure. According to certain illustrative embodiments, the emulsion composition is applied to at least one surface of the roofing covering member by spraying, brushing, rolling, squeegeeing, scraping, troweling, extrusion, or combinations thereof. According to certain illustrative embodiments, the emulsion composition is applied to a roofing covering by spraying. Prior to spray applying the emulsion treatment to the roof shingles, the emulsion is first diluted with a suitable solvent such as water. Suitable dilution ratios for diluting the concentrated emulsion with the solvent is 1 part emulsion to 4 parts solvent or 1 part emulsion to 3 parts solvent, or 1 part emulsion to 2 parts solvent. Following the dilution of the emulsion treatment with water, the treatment is spray applied to roofing shingles with commercial spray equipment at a rate of 0.005 gallons per square foot.

### EXAMPLES

### Example 1

A treatment emulsion comprising an oil-in-water emulsion was prepared by emulsifying an oil phase in a water phase with one or more surfactants. An oil component comprising 60.5 weight percent of a blend of linoleic acid (8 wt%) and linoleic acid (ω-3; 52.5 wt%), 23 weight percent of monounsaturated fatty acids comprising at least oleic acid (ω-9; 22.6 wt%), 15.5 weight percent of saturated fatty acids and 1 weight percent other components was used to prepare the oil phase of the treatment emulsion. The oil phase was prepared by combining 30 weight percent of the oil component, 2 weight percent naphthalene alkoxylate polymer non-ionic surfactant, 0.05 weight percent of a defoamer, 0.1 weight percent of a biocide and 0.1 weight percent of xanthan gum in a mixing vessel positioned under a Hockmeyer disperser equipped with a 4-inch F-style blade. The blade was lowered into the oil phase and the oil phase was mixed for 15 minutes at a rotational speed of 800 RPM. While the Hockmeyer dispenser was still mixing the oil phase, 33 weight percent of water was slowly added into the oil phase. With the Hockmeyer disperser still mixing, an in-line Silverson rotor-stator mixer was turned on to shear mix the combination of the oil phase and initial water addition at 8000 RPM for 5 minutes. After 5 minutes of shear mixing, the Silverson mixer was reduced to 30 Hertz and 33.75 weight percent of additional water was slowly added. The Silverson mixer was turned off and the contents of the mixing vessel were mixed with the Hockemeyer disperser for an additional 15 minutes at 800 RPM.

### Example 2

The treatment emulsion of Example 2 comprising an oil-in-water emulsion was prepared in accordance with Example 1, but with using an oil phase prepared with 30 weight percent of the oil component, 2 weight percent naphthalene alkoxylate polymer non-ionic surfactant, 0.05 weight percent of a defoamer, 0.1 weight percent of a biocide and 0.1 weight percent of xanthan gum, and reduction of 1 weight percent of water from the water phase.

### Example 3

The treatment emulsion of Example 3 comprising an oil-in-water emulsion was prepared in accordance with Example 1, but with using an oil phase prepared with 30 weight percent of the oil component, 3 weight percent naphthalene alkoxylate polymer non-ionic surfactant, 0.05 weight percent of a defoamer, 0.1 weight percent of a biocide and 0.1 weight percent of xanthan gum, and reduction of 2 weight percent of water from the water phase.

### Example 4

The treatment emulsion of Example 4 comprising an oil-in-water emulsion was prepared in accordance with Example 1, but with using an oil phase prepared with 30 weight percent of the oil component, 4 weight percent naphthalene alkoxylate polymer non-ionic surfactant, 0.05 weight percent of a defoamer, 0.1 weight percent of a biocide and 0.1 weight percent of xanthan gum, and reduction of 3 weight percent of water from the water phase.

### Example 5

The treatment emulsion of Example 5 comprising an oil-in-water emulsion was prepared in accordance with Example 1, but with using an oil phase prepared with 30 weight percent of the oil component, 5 weight percent naphthalene alkoxylate polymer non-ionic surfactant, 0.05 weight percent of a defoamer, 0.1 weight percent of a biocide and 0.1 weight percent of xanthan gum, and reduction of 4 weight percent of water from the water phase.

### Example 6

The treatment emulsion of Example 6 comprising an oil-in-water emulsion was prepared in accordance with Example 1, but with using an oil phase prepared with 30 weight percent of the oil component, 8.20 weight percent naphthalene alkoxylate polymer non-ionic surfactant, 0.05 weight percent of a defoamer, 0.1 weight percent of a biocide and 0.1 weight percent of xanthan gum, and reduction of 7.20 weight percent of water from the water phase.

### Example 7

A treatment emulsion comprising an oil-in-water emulsion was prepared by emulsifying an oil phase in a water phase with one or more surfactants. An oil component comprising 60.5 weight percent of a blend of linoleic acid (8 wt%) and linoleic acid (ω-3; 52.5 wt%), 23 weight percent of monounsaturated fatty acids comprising at least oleic acid (ω-9; 22.6 wt%), 15.5 weight percent of saturated fatty acids and 1 weight percent other components was used to prepare the oil phase of the treatment emulsion. The oil phase was prepared by combining 30 weight percent of the oil component, 1 weight percent of soy-derived lecithin, 2 weight percent Surfynol 440 surfactant, 0.05 weight percent of a defoamer, 0.1 weight percent of a biocide and 0.1 weight percent of xanthan gum in a mixing vessel positioned under a Hockmeyer disperser equipped with a 4-inch F-style blade. The blade was lowered into the oil phase and the oil phase was mixed for 15 minutes at a rotational speed of 800 RPM. While the Hockmeyer dispenser was still mixing the oil phase, 33 weight percent of water was slowly added into the oil phase. With the Hockmeyer disperser still mixing, an in-line Silverson rotor-stator mixer was turned on to shear mix the combination of the oil phase and initial water addition at 8000 RPM for 5 minutes. After 5 minutes of shear mixing, the Silverson mixer was reduced to 30 Hertz and 33.75 weight percent of additional water was slowly added. The Silverson mixer was turned off and the contents of the mixing vessel were mixed with the Hockemeyer disperser for an additional 15 minutes at 800 RPM.

### Example 8

The treatment emulsion of Example 8 comprising an oil-in-water emulsion was prepared in accordance with Example 7, but with using an oil phase prepared with 30 weight percent of the oil component, 2 weight percent naphthalene alkoxylate polymer non-ionic surfactant instead of Surfynol 440, 0.05 weight percent of a defoamer, 0.1 weight percent of a biocide and 0.1 weight percent of xanthan gum.

### Example 9

The treatment emulsion of Example 9 comprising an oil-in-water emulsion was prepared in accordance with Example 7, but with using an oil phase prepared with 30 weight percent of the oil component, 5.50 weight percent naphthalene alkoxylate polymer non-ionic surfactant, 0.05 weight percent of a defoamer, 0.1 weight percent of a biocide and 0.1 weight percent of xanthan gum, and reduction of 3.5 weight percent of water from the water phase.

The median and mean emulsion particle sizes of Examples 1-9 are set forth in Table 1 below:

**Table 1**

| Examples | Mean Particle Size (µm) | Median Particle Size (µm) |
|---|---|---|
| Example 1 | 17.67 | 9.592 |
| Example 2 | 18.61 | 10.17 |
| Example 3 | 24.33 | 18.93 |
| Example 4 | 22.3 | 14.66 |
| Example 5 | 18.32 | 7.82 |
| Example 6 | 6.281 | 4.659 |
| Example 7 | 8.318 | 4.215 |
| Example 8 | 17.32 | 9.496 |
| Example 9 | 7.11 | 5.953 |

While the present disclosure has been described in connection with various illustrative embodiments, it is to be understood that other similar embodiments may be used or modifications and additions may be made to the described embodiments for performing the same function disclosed herein without deviating therefrom. The embodiments described above are not necessarily in the alternative, as various embodiments may be combined to provide the desired characteristics. Therefore, the present disclosure should not be limited to any single embodiment, but rather construed in breadth and scope in accordance with the recitation of the appended claims.

## Claims

1. An emulsion comprising at least one plant-derived oil, at least one surfactant comprising an alkoxylated aromatic hydrocarbon, and water.

2. The emulsion of claim 1, comprising from about 25 weight percent to about 35 weight percent of said plant-derived oil, from about 3 weight percent to about 10 weight percent of said at least one surfactant, and from about 58.75 weight percent to about 71.75 weight percent of water; preferably comprising from about 28 weight percent to about 32 weight percent of said plant-derived oil, from about 4 weight percent to about 8 weight percent of said at least one surfactant, and from about 61.75 weight percent to about 68.75 weight percent of water, more preferably comprising from about 29.5 weight percent to about 30.5 weight percent of said plant-derived oil, from about 5.5 weight percent to about 7.5 weight percent of said at least one surfactant, and from about 62.75 weight percent to about 66.75 weight percent of water.

3. The emulsion of any of the preceding claims, wherein said at least one surfactant is further selected from the group consisting of anionic surfactants, cationic surfactants, non-ionic surfactants and zwitterionic surfactants; preferably the zwitterionic surfactant is lecithin.

4. A method for treating an asphalt or bituminous roofing member comprising applying an emulsion comprising at least one plant-derived oil, at least one surfactant comprising an alkoxylated aromatic hydrocarbon, and water to at least one surface of the asphalt or bituminous roofing member.

5. The method of claim 4, wherein the emulsion comprises from about 25 weight percent to about 35 weight percent of said plant-derived oil, from about 3 weight percent to about 10 weight percent of said at least one surfactant, and from about 58.75 weight percent to about 71.75 weight percent of water; preferably he emulsion comprises from about 28 weight percent to about 32 weight percent of said plant-derived oil, from about 4 weight percent to about 8 weight percent of said at least one surfactant, and from about 61.75 weight percent to about 68.75 weight percent of water; more preferably the emulsion comprises from about 29.5 weight percent to about 30.5 weight percent of said plant-derived oil, from about 5.5 weight percent to about 7.5 weight percent of said at least one surfactant, and from about 62.75 weight percent to about 66.75 weight percent of water.

6. The method according to any of claim 4 - 5, wherein said at least one surfactant is further selected from the group consisting of anionic surfactants, cationic surfactants, non-ionic surfactants and zwitterionic surfactants; preferably the zwitterionic surfactant is lecithin.

7. The method according to any of claim 4 - 6, wherein the asphalt roofing member is an asphalt roof shingle.

8. An asphalt roofing member or bituminous roofing member having an emulsion comprising at least one plant-derived oil, at least one surfactant comprising an alkoxylated aromatic hydrocarbon, and water applied to at least one surface of the asphalt or bituminous roofing member.

9. The asphalt or bituminous roofing member of claim 8, selected from the group consisting of asphalt roofing shingle, bituminous roofing shingle, asphalt roll roofing, bituminous roll roofing, polymer modified bituminous roll roofing, asphalt impregnated roofing underlayments, bitumen impregnated roofing underlayments, and polymer modified bitumen impregnated roofing underlayments.

10. A roof comprising a roof substrate and an asphalt or bituminous roofing member attached to at least a portion of the roof substrate, the asphalt or bituminous roofing member treated with an emulsion comprising at least one plant-derived oil, at least one surfactant comprising an alkoxylated aromatic hydrocarbon, and water to treat an asphalt roofing member.
